# EUROPEAN PATENT SPECIFICATION

(11) **EP 2 883 101 B1**
(45) Date of publication and mention of the grant of the patent: **20.11.2019**
(21) Application number: 13777325.5
(22) Date of filing: 10.10.2013
(51) Int. Cl.: G02B 27/01

(54) **HEAD MOUNTABLE DEVICE WITH HOLDER FOR MOBILE DEVICE**
AM KOPF TRAGBARE VORRICHTUNG MIT HALTERUNG FÜR EIN MOBILES GERÄT
DISPOSITIF MONTABLE SUR LA TÊTE AVEC SUPPORT POUR UN DISPOSITIF MOBILE

(30) Priority: 11.10.2012 US 201213649425
(43) Date of publication of application: 17.06.2015
(73) Proprietor: Sony Interactive Entertainment Europe Limited, London W1F 7LP (GB)
(72) Inventor: BICKERSTAFF, Ian Henry, London W1F 7LP (GB); BENSON, Simon Mark, London W1F 7LP (GB)
(74) Representative: D Young & Co LLP
(86) International application number: PCT/GB2013/052645
(87) International publication number: WO 2014/057275

(56) References cited:
- WO-A1-02/43041
- WO-A1-98/18038
- JP-A- 2008 113 416
- US-A- 6 085 112
- US-A1- 2005 078 378
- US-A1- 2009 109 404
- US-A1- 2010 079 356
- US-A1- 2012 050 144

## Description

### BACKGROUND

### Field of the Invention

This invention relates to head-mountable devices.

### Description of the Related Art

The "background" description provided herein is for the purpose of generally presenting the context of the disclosure. Work of the presently named inventors, to the extent it is described in this background section, as well as aspects of the description which may not otherwise qualify as prior art at the time of filing, are neither expressly or impliedly admitted as prior art against the present invention.

A head-mountable display (HMD) is an image or video display device which may be worn on the head or as part of a helmet or other head mounted frame. Either one eye or both eyes are provided with small electronic display devices.

Some HMDs allow a displayed image to be superimposed on a real-world view. This type of HMD can be referred to as an optical see-through HMD and generally requires the display devices to be positioned somewhere other than directly in front of the user's eyes. Some way of deflecting the displayed image so that the user may see it is then required. This might be through the use of a partially reflective mirror placed in front of the user's eyes so as to allow the user to see through the mirror but also to see a reflection of the output of the display devices. In another arrangement, disclosed in EP-A-1 731 943 and US-A-2010/0157433, a waveguide arrangement employing total internal reflection is used to convey a displayed image from a display device disposed to the side of the user's head so that the user may see the displayed image but still see a view of the real world through the waveguide. Once again, in either of these types of arrangement, a virtual image of the display is created (using known techniques) so that the user sees the virtual image at an appropriate size and distance to allow relaxed viewing. For example, even though the physical display device may be tiny (for example, 10 mm x 10 mm) and may be just a few millimetres from the user's eye, the virtual image may be arranged so as to be perceived by the user at a distance of (for example) 20 m from the user, having a perceived size of 5 m x 5m.

Other HMDs, however, allow the user only to see the displayed images, which is to say that they obscure the real world environment surrounding the user. This type of HMD can position the actual display devices in front of the user's eyes, in association with appropriate lenses which place a virtual displayed image at a suitable distance for the user to focus in a relaxed manner - for example, at a similar virtual distance and perceived size as the optical see-through HMD described above. This type of device might be used for viewing movies or similar recorded content, or for viewing so-called virtual reality content representing a virtual space surrounding the user. It is of course however possible to display a real-world view on this type of HMD, for example by using a forward-facing camera to generate images for display on the display devices.

Although the original development of HMDs was perhaps driven by the military and professional applications of these devices, HMDs are becoming more popular for use by casual users in, for example, computer game or domestic computing applications.

Previously proposed arrangements are disclosed in US 2012/050144 A1.

It is to be understood that both the foregoing general description of the invention and the following detailed description are exemplary, but are not restrictive, of the invention.

### SUMMARY

The present invention provides a system according to claim 1. The invention further provides a method according to claim 8 and computer software according to claim 9.

### BRIEF DESCRIPTION OF THE DRAWINGS

A more complete appreciation of the disclosure and many of the attendant advantages thereof will be readily obtained as the same becomes better understood by reference to the following detailed description when considered in connection with the accompanying drawings, wherein:
Figures 1A and 1B schematically illustrate an HMD;
Figures 2A and 2B schematically illustrate the user's view when using the HMD of Figure 1;
Figure 3 shows an HMD including a front-facing camera;
Figures 4A and 4B schematically illustrate an eye tracking process; and
Figure 5A and 5B schematically illustrate another embodiment of HMD.

### DESCRIPTION OF THE EMBODIMENTS

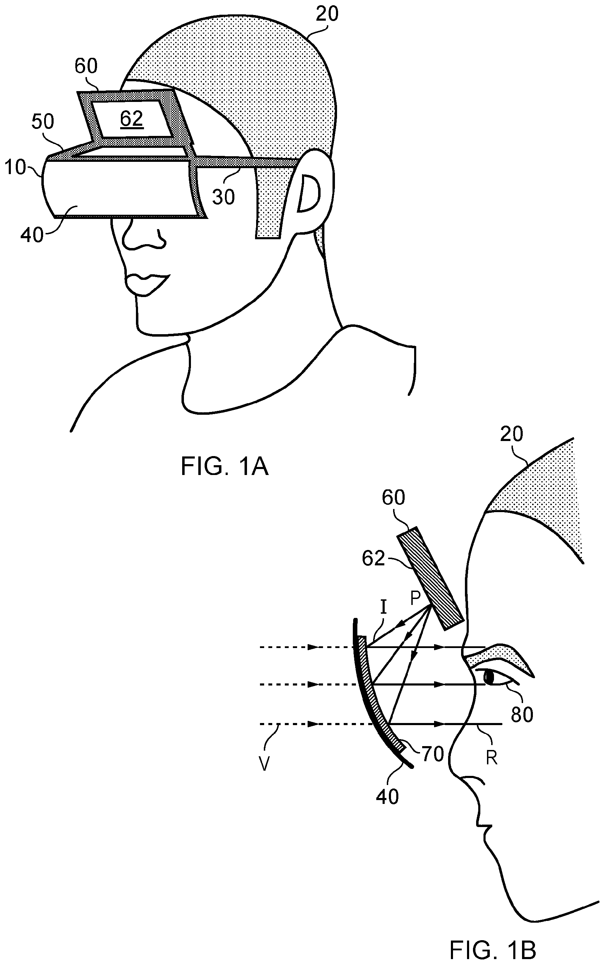

Referring now to the drawings, Figure 1A shows a head-mountable display device (HMD) 10 according to the disclosure.

In order to clearly demonstrate the way in which the HMD 10 operates, it is illustrated in a situation in which it is mounted on the head of a user 20.

The HMD 10 comprises a frame 30 which allows the HMD to be mounted on the head of the user. In this particular example, the frame 30 is similar to the frames used in ordinary spectacles. There are, however, many different variations that could be used. The frame could, for example, be comprised within a hat or helmet which is worn by the user. Accordingly, the frame 30 provides a frame to be mounted onto a user's head, the frame defining an eye display position which, in use, is positioned in front of an eye of the user. The eye display position is occupied by a reflective element, to be described below.

The frame 30 defines an eye display position which is positioned in front of the eyes of the user. It would also be acceptable for the eye display position to be positioned in front of a single eye of the user. A reflective element 40 is mounted with respect to the eye display position. The reflective element may comprise a reflective surface which, in use, is visible to the eye of the user and which is configured to reflect light incident upon the reflective surface so as to form a reflected image. The reflective element 40 is discussed in more detail later.

The HMD 10 comprises a mobile device holder 50 for holding a mobile device 60, such as a mobile telephone or hand-held games console. The mobile device comprises a display screen 62. The mobile device holder is configured to hold the mobile device at a location and orientation on the frame, such as a location in which the mobile device does not itself block the forward line of sight of the user, or in other words, so that the mobile device does not itself occupy the eye display position. The mobile device holder may be fixed, so that the location and orientation in which the mobile device is held does not change, or may be movable, so that the location and orientation in which the mobile device is held may be changed, for example by the user manually releasing a catch, detent or lock (not shown) to allow changes, and then reimposing the catch so as to avoid inadvertent movement of the mobile device with respect to the rest of the frame while in use. In either case, the location and orientation in which the mobile device is held are relative to a location and orientation of the reflective surface are such that, in use, light arriving from a screen of the mobile device held in the mobile device holder is reflected by the reflective surface so that a reflected image of at least a portion of the screen is visible to the user.

Any suitable method known in the art could be used for holding the mobile device 60 on or in the mobile device holder 50. For example, a clamp system could be used in which the mobile device is clamped into place. Alternatively, the mobile device 60 could comprise a first adhesive or hook-and-loop patch and the mobile device holder could comprise a second, complementary adhesive or hook-and-loop patch, so that when the first and second adhesive patches come into contact, the mobile device is held in place on the mobile device holder. The shape and size of the mobile device holder, together with the method for holding the mobile device on or in the mobile device holder, can be chosen so as to allow a wide range of mobile devices of different size and shape to be held by the mobile device holder.

Figure 1B shows the arrangement of Figure 1A from a different perspective, and schematically illustrates the operation the HMD 10 in more detail. In order to improve the clarity of Figure 1B, the frame 30 and mobile device holder 50 have been omitted from the drawing.

The reflective element 40 comprises a reflective surface 70 which is visible to the eye 80 of the user 20. The reflective surface 70 is configured to reflect light incident upon it so as to form a reflected image. The location and orientation in which the mobile device 60 is held relative to the location and orientation of the reflective surface 70 are such that light arriving from the screen 62 of the mobile device is reflected by the reflective surface so that a reflected image of at least a portion of the screen is visible to the observer. Thus, in this way, an image generated on the screen 62 of the mobile device 60 is visible to the user as a reflection on the reflective surface 70.

Here, the reflective surface 70 forms or comprises a concave mirror. Schematic light rays are shown which illustrate light arriving from the screen 62 of the mobile device 60 and being reflected by the reflective surface 70. Specifically, incident light rays I arrive from a single point P on the screen and are reflected by the reflective surface as reflected light rays R. The reflected light rays R define a virtual image of the single point on the screen, the position of which can be determined by extrapolating the reflected light rays R behind the reflective surface 70 as virtual light rays V.

In this particular case, the reflected light rays R are collimated, meaning that the virtual image appears at an infinite distance behind the reflective surface 70. This is a result of the single point on the screen being positioned at a distance from the reflective surface which is equal to the focal length of the concave mirror formed by the reflective surface. The size of the virtual image will be magnified as the screen is moved to a position with a distance from the reflective surface which is closer than the focal length of the concave mirror. That is, the reflected image of the screen will appear larger than the actual, real-life size of the screen in this case. Thus, advantageously, by using a reflective surface which forms a concave mirror, with at least a portion of the screen of the mobile device being less than or equal to the focal length of the mirror from the concave mirror, a magnified view of images displayed on the screen can be seen by the user.

An example of a suitable reflective surface is a portion of a spherical mirror. Alternatively a parabolic reflector could be used, or a mirror which has one curvature in a vertical image direction and another curvature in a horizontal image direction. The reflective surface may be fully reflective (substantially 100% reflectivity, or in other words as near to 100% as reasonably priced technology allows, for example more than 98% or more than 99% reflective), partially transparent (and therefore partially reflective, for example, 30-80% reflective and 20%-70% transparent) or switchable between a fully reflective and a partially reflective mode (as described in more detail below).

For an image to appear at infinity, theoretically the radius of curvature of the mirror would be twice the distance of the display from the mirror. For example, placing the mirror 10cm from the display would require a 20cm radius spherical concave mirror. As an example, the display is positioned at 10cm from the mirror but is designed to place the virtual image slightly closer than infinity and so the mirror's radius of curvature is approximately 27cm. In other examples, the off-axis nature of the design may be catered for by using a more complex shape such as a parabolic shape

The reflective surface may be manufactured from a plastics or acrylic material such as Perspex. The reflective surface may be manufactured from a single piece of such material.

Alternatives to reflective surfaces using mirrors as described include the use of a Fresnel component to allow a wider range of curvatures to be used without altering the optical properties. Fresnel reflectors can be created by known techniques on flat substrates but to have the properties of curved reflectors, by making use of an array of very small micro-mirrors, each with slightly different reflection angles so that, taken together, they provide similar properties to a curved mirror. Alternatively it is possible to use a flat mirror and a beam splitter, with a collimation lens in front of the display, so that diverging light from the display is collimated into parallel light (as though coming from a virtual image at infinity) which can then be reflected by an angled, but flat, mirror towards the viewer.

In general terms, the arrangement gives the impression to the user that the user is seeing the display in front of his or her face, though at infinity (or at least a distance of more than, say, 1m from the user), and that the display size is greatly enlarged when compared to the physical display screen 62.

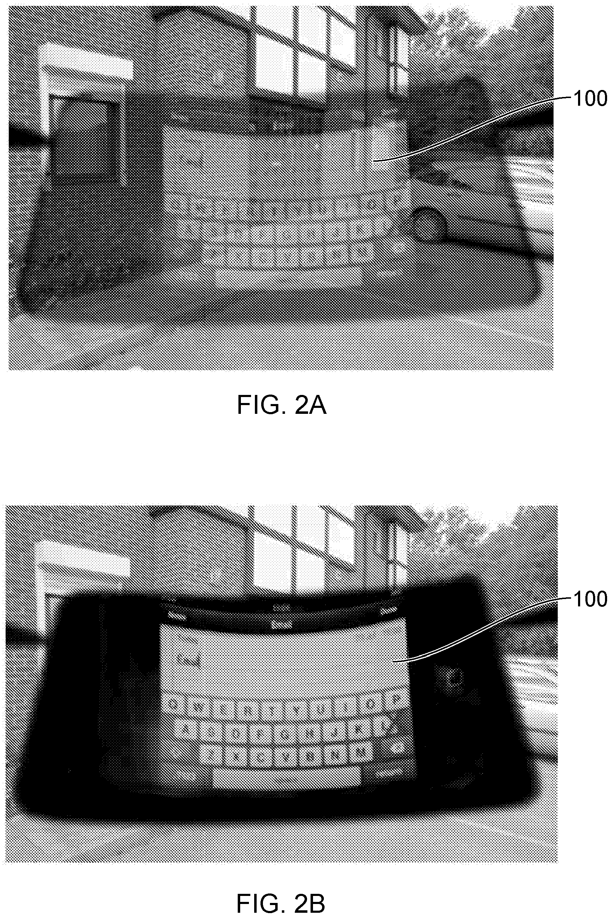

Figures 2A and 2B schematically illustrate the user's view of the reflective surface, in the case of a partially reflective surface (Figure 2A) and a fully reflective surface (Figure 2B). In the case of Figure 2A, the matter displayed on the screen 62 is superposed over the real background view (the house and car in this example), so allowing augmented reality techniques to be employed. In the arrangement of Figure 2B, the background is obscured by the substantially fully reflective surface.

The reflective properties of the reflective surface may be altered by the user. In one example, a liquid crystal shutter may be employed behind the reflective surface (for example, on a rear surface, relative to the user in use, of the reflective surface) so as to vary between opacity and transparency in response to an electrical signal from a user control (not shown). In such an example, the head-mountable display device comprises a reflective element transparency control unit; and the reflective element comprises a liquid crystal shutter element operable to alter the transparency of the reflective element in response to an instruction issued by the reflective element transparency control unit.

In another example, the user may operate a mechanical shutter behind the reflective surface so as to vary the light transmission of the reflective surface, for example by moving a non-transparent shutter element movably mounted on the frame and operable to be moved into a position in which at least a portion of a surface of the reflective element other than the reflective surface is overlapped by the non-transparent shutter element, so that the amount of light incident upon the at least a portion of the surface of the reflective element is reduced. In this way, the user may choose between the arrangements of Figures 2A and 2B.

In the examples of Figures 2A and 2B, the matter 100 from the screen 62 has been distorted (by being bent or curved) by the reflection it has undergone. This is because of the curvature of the particular reflective surface used in this example, and does not indicate that all suitable reflective surfaces will cause such distortion. Distortions of this type can be compensated for by a complementary pre-distortion applied to the matter to be displayed on the screen 62. Such a pre-distortion can be applied by the mobile device 60, for example. It is possible instead to use a curved display screen 62, for example formed of an Organic Light Emitting Diode (OLED) screen. Here, the mobile device comprises a screen; an image generation unit operable to generate an image for being displayed on the screen and reflected in the reflective surface of the reflective element of the head-mountable display device; and an image warp compensation unit operable to warp or distort the generated image so as to compensate for a warped appearance of the image when it is reflected, the image warp compensation unit warping the generated image on the basis of one or more parameters related to the curvature of the reflective surface of the reflective element of the head-mountable display device; wherein the screen is operable to display the warp-compensated image.

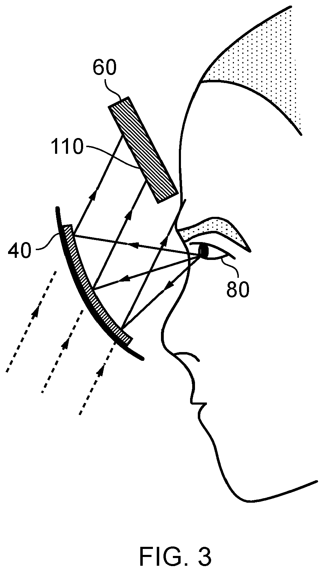

It is noted here that some mobile or games devices of the type which may be used as the device 60 also comprise front-facing cameras. Here, the term "front facing" is used to indicate that the camera is on the same face of the mobile device as the screen 62, so that the camera captures an image of the user viewing the screen. Such cameras are sometimes used in video conferencing or similar applications. Such a camera 110 is located on the same face of the device 60 as the screen 62 in the example of Figure 3.

Because the screen 62 is directed towards the reflective surface, and by reflection to the user's eyes, it follows that a front-facing camera such as the camera 110 will be directed towards the user's eyes, by virtue of the reflection by the reflective surface. Accordingly, the eye display position discussed above may also be considered (form the point of view of the camera) as a an eye-tracking reflection position.

This allows various possibilities, one being that of eye tracking.

In embodiments of the invention, the location and orientation in which the mobile device is held relative to the location and orientation of the reflective surface are such that, in use, the light arriving from the eye of the user is reflected by the reflective surface so that a reflected image of the eye of the user is within the field of view of a camera of the mobile device.

A suitable mobile device for use in such embodiments comprises a camera operable to capture an image comprising a reflected image of the eye of the user reflected by the reflective surface of the reflective element and comprising an image of a portion of the user's visual environment; an eye-tracking unit operable to determine a first portion of the captured image corresponding to the reflected image of the eye of the user and to perform eye-tracking processing on the first portion; and a location and mapping unit operable to determine a second portion of the captured image corresponding to the image of the portion of the user's visual environment and to perform location and mapping processing on the second portion (for example, in order to detect the current location of the camera and the current location, relative to the camera, of objects in the captured scene) by analysis of the captured images alone.

Image processing and location and mapping processes carried out by the mobile device may be performed by a data processor within the mobile device, under the control of appropriate computer software. Such software is considered to be an embodiment of the invention. The software may be provided by a storage or transmission medium such as a non-transitory machine readable storage medium (for example, a magnetic or optical disk or a nonvolatile or read-only memory). Such media are also considered as forming part of the present disclosure.

The front-facing camera 110 can capture images of one or both of the user's eyes 80 during use of the display, and using known eye-tracking techniques the mobile device 60 can detect the direction in which the user is looking at a particular time. This information can be used so as to provide interaction with the matter 100 displayed to the user via the screen 62, or for monitoring the user's attentiveness to game features, advertising or the like, or to allow the user to control certain functions of the mobile device 60.

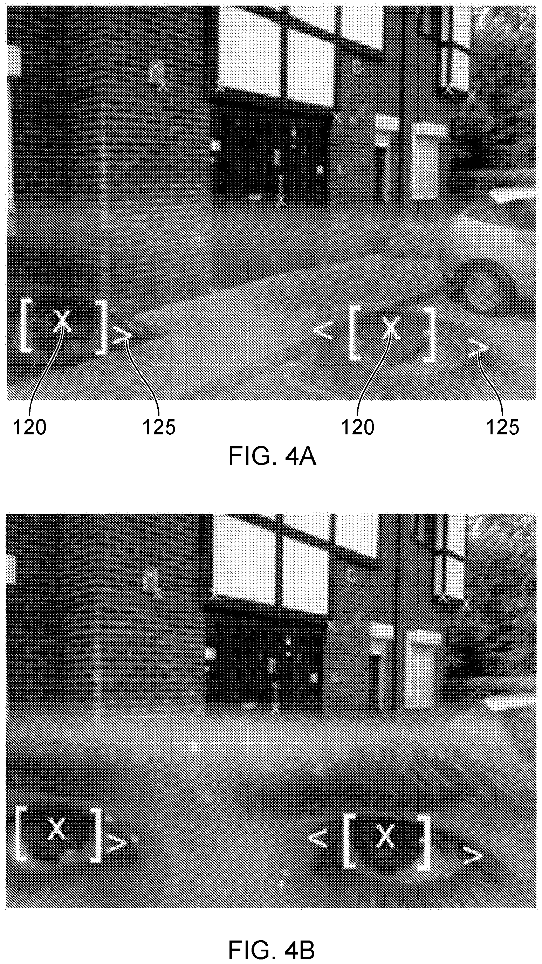

Figures 4A and 4B schematically illustrate the view of the front-facing camera 110 of the mobile device in the case of a partially transparent (partially reflective) mirror (Figure 4A) and a fully reflective mirror (Figure 4B). In each case, the eye position 120 of each eye and its direction of observation or movement 125 can be detected. In the case of Figure 4A, the quality of the image captured of the user's eyes will be less than that obtained in Figure 4B, but the system does have the advantage that the front-facing camera can detect what the user is looking at (the background scene). In Figure 4B the image quality is higher but the camera cannot detect what the user is looking at.

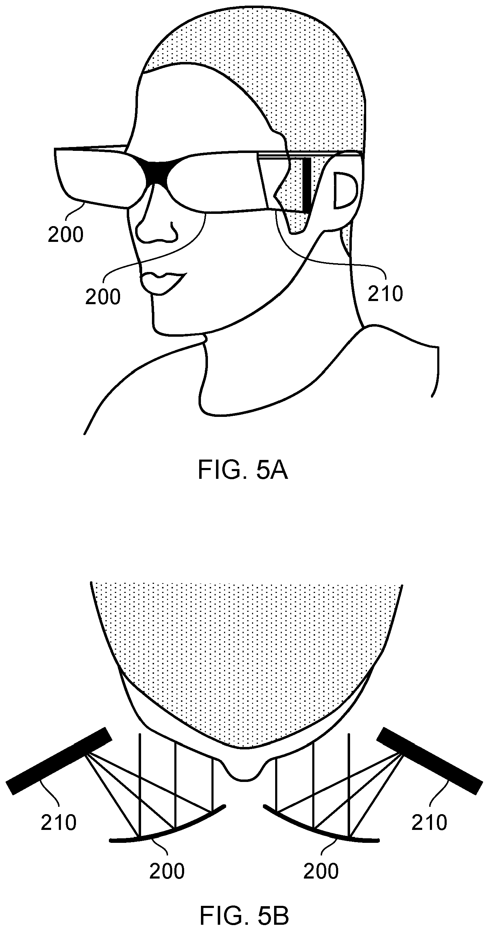

Figures 5A and 5B schematically illustrate an alternative arrangement involving two mobile devices having display screens 210 and two respective reflective surfaces 200, one for each eye. The fact that the mobile devices are displaced laterally with respect to the user's head (rather than above) allows the front-facing cameras of the mobile devices (if provided) to obtain, between them, a stereoscopic view of the ambient surroundings.

The techniques described above may be implemented in hardware, software or combinations of the two. In the case that a software-controlled data processing apparatus is employed to implement one or more features of the embodiments, it will be appreciated that such software, and a storage or transmission medium such as a non-transitory machine-readable storage medium by which such software is provided, are also considered as forming part of the present disclosure.

Numerous modifications and variations of the present disclosure are possible in light of the above teachings. It is therefore to be understood that within the scope of the appended claims, the invention may be practised otherwise than as specifically described herein.

## Claims

1. A system comprising:
a head-mountable device; and
a mobile device (60) having a camera (110);
the head-mountable device comprising:
a frame (30) to be mounted onto a user's head, the frame defining an eye-tracking reflection position which is positionable in front of an eye of the user;
a reflective element (40) mounted with respect to the eye-tracking reflection position, the reflective element comprising a reflective surface which is located and orientated so as to reflect light arriving from the eye of the user; and
a mobile device holder (50) configured to hold the mobile device (60) at a location and orientation on the frame; wherein
the reflective surface (70) is configured to reflect light incident upon the reflective surface so as to form a reflected image:
the camera (110) being a front-facing camera, operable to capture an image comprising a reflected image of the eye of the user reflected by the reflective surface of the reflective element and comprising an image of a portion of the user's visual environment;
the location and orientation in which the mobile device is held relative to the location and orientation of the reflective surface are such that, in use, the light arriving from the eye of the user is reflected by the reflective surface so that a reflected image of the eye of the user is within the field of view of the camera (110) of the mobile device; and
the location and orientation in which the mobile device is held are such that a portion of the user's visual environment is within the field of view of the camera;
the mobile device further comprising:
a screen (62) for displaying matter to the user via the reflective surface, the camera (110) being located on the same face of the mobile device (60) as the screen (62);
an eye-tracking unit operable to determine a first portion of the captured image corresponding to the reflected image of the eye of the user and to perform eye-tracking processing on the first portion; and
a location and mapping unit operable to determine a second portion of the captured image corresponding to the image of the portion of the user's visual environment and to perform location and mapping processing on the second portion.

2. A device according to claim 1, wherein:
the reflective surface forms a concave mirror, located and orientated such that, in use, at least a portion of the eye of the user is at a distance from the concave mirror which is less than or equal to the focal length of the concave mirror.

3. A device according to claim 1, wherein the reflective element is semi-transparent.

4. A device according to claim 3, comprising:
a non-transparent shutter element movably mounted on the frame and operable to be moved into a position in which at least a portion of a surface of the reflective element other than the reflective surface is overlapped by the non-transparent shutter element, so that the amount of light incident upon the at least a portion of the surface of the reflective element is reduced.

5. A device according to any one of claims 1 to 4, wherein the reflective element is formed from a single piece of acrylic material.

6. A device according to claim 1, wherein:
the head-mountable device comprises a reflective element transparency control unit; and
the reflective element comprises a liquid crystal shutter element operable to alter the transparency of the reflective element in response to an instruction issued by the reflective element transparency control unit.

7. A device according to any one of claims 1 to 6, wherein the mobile device holder is configured to hold one of a mobile telephone and a hand-held games console as the mobile device.

8. A method for use in a system according to claim 1, the method comprising:
capturing an image comprising a reflected image of the eye of the user reflected by the reflective surface of the reflective element and comprising an image of a portion of the user's visual environment, using the camera of the mobile device;
determining a first portion of the captured image corresponding to the reflected image of the eye of the user and performing eye-tracking processing on the first portion; and determining a second portion of the captured image corresponding to the image of the portion of the user's visual environment and performing location and mapping processing on the second portion.

9. Computer software which, when executed by a computer, causes the computer to perform the method of claim 8.

## Patentansprüche

1. System, aufweisend:
eine am Kopf befestigbare Vorrichtung; und
eine mobile Vorrichtung (60) mit einer Kamera (110);
wobei die am Kopf befestigbare Vorrichtung aufweist:
einen auf einem Kopf eines Benutzers zu befestigenden Rahmen (30), wobei der Rahmen eine Eye-Tracking-Reflexionsposition definiert, welche vor einem Auge des Benutzers positionierbar ist;
ein reflektierendes Element (40), welches in Bezug auf die Eye-Tracking-Reflexionsposition montiert ist, wobei das reflektierende Element eine reflektierende Fläche aufweist, welche angeordnet und orientiert ist, um von dem Auge des Benutzers ankommendes Licht zu reflektieren; und
eine Halterung (50) für eine mobile Vorrichtung, welche dafür ausgelegt ist, um die mobile Vorrichtung (60) an einer Position und unter einer Ausrichtung an dem Rahmen zu halten; wobei
die reflektierende Fläche (70) dafür ausgelegt ist, um auf die reflektierende Fläche einfallendes Licht zu reflektieren, um ein reflektiertes Bild zu bilden;
wobei die Kamera (110) eine nach vorn gerichtete Kamera ist, welche betreibbar ist, um ein Bild zu erfassen, welches ein von der reflektierenden Fläche des reflektierenden Elements reflektiertes Bild des Auges des Benutzers aufweist und welches ein Bild eines Abschnitts der visuellen Umgebung des Benutzers aufweist;
die Stelle und Ausrichtung, an welcher die mobile Vorrichtung in Bezug auf die Stelle und Ausrichtung der reflektierenden Fläche gehalten wird, sind derartig, dass im Einsatz das von dem Auge des Benutzers ankommende Licht von der reflektierenden Fläche reflektiert wird, so dass sich ein reflektiertes Bild des Auges des Benutzers innerhalb des Sichtfeldes der Kamera (110) der mobilen Vorrichtung befindet; und
wobei die Position und Ausrichtung, in welcher die mobile Vorrichtung gehalten wird, derartig sind, dass sich ein Abschnitt der visuellen Umgebung des Benutzers innerhalb des Sichtfeldes der Kamera befindet;
wobei die mobile Vorrichtung ferner aufweist:
einen Bildschirm (62), um dem Benutzer über die reflektierende Oberfläche Sachen anzuzeigen, wobei die Kamera (110) auf der gleichen Seite der mobilen Vorrichtung (60) wie der Bildschirm (62) angeordnet ist;
eine Eye-Tracking-Einheit, welche betreibbar ist, um einen ersten Abschnitt des erfassten Bildes festzulegen, welcher dem reflektierten Bild des Auges des Benutzers entspricht, und um Eye-Tracking-Verarbeitung an dem ersten Abschnitt durchzuführen; und
eine Positions- und Zuordnungseinheit, welche betreibbar ist, um einen zweiten Abschnitt des erfassten Bildes festzulegen, welcher dem Bild des Abschnitts der visuellen Umgebung des Benutzers entspricht, und um Positions- und
Zuordnungsverarbeitung an dem zweiten Abschnitt durchzuführen.

2. Vorrichtung nach Anspruch 1, wobei:
die reflektierende Fläche einen konkaven Spiegel bildet, welcher derartig angeordnet und ausgerichtet ist, dass sich im Einsatz mindestens ein Abschnitt des Auges des Benutzers in einem Abstand von dem konkaven Spiegel befindet, welcher kleiner als oder gleich der Brennweite des konkaven Spiegels ist.

3. Vorrichtung nach Anspruch 1, wobei das reflektierende Element teildurchlässig ist.

4. Vorrichtung nach Anspruch 3, aufweisend:
ein nicht-transparentes Verschlusselement, welches auf dem Rahmen beweglich montiert und betreibbar ist, um in eine Stellung bewegt zu werden, in welcher mindestens ein Abschnitt einer Fläche des reflektierenden Elements, welcher nicht die reflektierende Fläche ist, von dem nicht-transparenten Verschlusselement überlappt wird, so dass die Menge an Licht, welche auf den mindestens einen Abschnitt der Fläche des reflektierenden Elements einfällt, verringert wird.

5. Vorrichtung nach einem der Ansprüche 1 bis 4, wobei das reflektierende Element aus einem einzigen Teil aus Acrylmaterial gebildet ist.

6. Vorrichtung nach Anspruch 1, wobei:
die am Kopf befestigbare Vorrichtung eine Transparenz-Steuereinheit des reflektierenden Elements aufweist; und
das reflektierende Element ein Flüssigkristall-Verschlusselement aufweist, welches betreibbar ist, um die Transparenz des reflektierenden Elements in Abhängigkeit von einer von der Transparenz-Steuereinheit des reflektierenden Elements ausgegebenen Anweisung zu verändern.

7. Vorrichtung nach einem der Ansprüche 1 bis 6, wobei die Halterung für eine mobile Vorrichtung dafür ausgelegt ist, um von einem Mobiltelefon und einer tragbaren Spielkonsole eines als die mobile Vorrichtung zu halten.

8. Verfahren zur Verwendung in einem System nach Anspruch 1, wobei das Verfahren aufweist:
Erfassen eines Bildes, welches ein von der reflektierenden Fläche des reflektierenden Elements reflektiertes Bild des Auges des Benutzers aufweist und welches ein Bild eines Abschnitts der visuellen Umgebung des Benutzers aufweist, unter Verwendung der Kamera der mobilen Vorrichtung;
Festlegen eines ersten Abschnitts des erfassten Bildes, welcher dem reflektierten Bild des Auges des Benutzers entspricht, und Durchführen von Eye-Tracking-Verarbeitung an dem ersten Abschnitt; und Festlegen eines zweiten Abschnitts des erfassten Bildes, welcher dem Bild des Abschnitts der visuellen Umgebung des Benutzers entspricht, und Durchführen von Positions- und Zuordnungsverarbeitung an dem zweiten Abschnitt.

9. Computersoftware, welche, wenn sie von einem Computer ausgeführt wird, den Computer dazu veranlasst, das Verfahren nach Anspruch 8 durchzuführen.

## Revendications

1. Système comprenant:
un dispositif pouvant être monté sur la tête; et
un dispositif mobile (60) comportant une caméra (110) ;
le dispositif pouvant être monté sur la tête comprenant:
un cadre (30) destiné à être monté sur la tête d'un utilisateur, le cadre définissant une position de réflexion de suivi oculaire qui peut être positionnée en face d'un œil de l'utilisateur;
un élément réfléchissant (40) monté par rapport à la position de réflexion de suivi oculaire, l'élément réfléchissant comprenant une surface réfléchissante qui est située et orientée de manière à réfléchir la lumière provenant de l'œil de l'utilisateur; et
un support de dispositif mobile (50) configuré pour maintenir le dispositif mobile (60) dans un emplacement et une orientation sur le cadre; dans lequel
la surface réfléchissante (70) est configurée pour réfléchir la lumière incidente sur la surface réfléchissante de manière à former une image réfléchie;
la caméra (110) étant une caméra orientée vers l'avant, pouvant fonctionner pour capturer une image comprenant une image réfléchie de l'œil de l'utilisateur réfléchie par la surface réfléchissante de l'élément réfléchissant et comprenant une image d'une partie de l'environnement visuel de l'utilisateur;
l'emplacement et l'orientation du dispositif mobile par rapport à l'emplacement et à l'orientation de la surface réfléchissante sont tels que, en cours d'utilisation, la lumière provenant de l'œil de l'utilisateur est réfléchie par la surface réfléchissante de sorte qu'une image réfléchie de l'œil de l'utilisateur est dans le champ de vision de la caméra (110) du dispositif mobile; et
l'emplacement et l'orientation de l'appareil mobile sont tels qu'une partie de l'environnement visuel de l'utilisateur se trouve dans le champ de vision de la caméra;
le dispositif mobile, comprenant en outre:
un écran (62) pour afficher de la matière à l'utilisateur via la surface réfléchissante, la caméra (110) étant située sur la même face du dispositif mobile (60) que l'écran (62);
une unité de suivi oculaire pouvant fonctionner pour déterminer une première partie de l'image capturée correspondant à l'image réfléchie de l'œil de l'utilisateur et pour effectuer un traitement de suivi oculaire sur la première partie; et
une unité de localisation et de cartographie pouvant être utilisée pour déterminer une seconde partie de l'image capturée correspondant à l'image de la partie de l'environnement visuel de l'utilisateur et pour effectuer un traitement de localisation et de cartographie sur la seconde partie.

2. Dispositif selon la revendication 1, dans lequel:
la surface réfléchissante forme un miroir concave, situé et orienté de telle sorte qu'en cours d'utilisation, au moins une partie de l'œil de l'utilisateur se trouve à une distance du miroir concave qui est inférieure ou égale à la distance focale du miroir concave.

3. Dispositif selon la revendication 1, dans lequel l'élément réfléchissant est semi-transparent.

4. Dispositif selon la revendication 3, comprenant:
un élément obturateur non transparent monté de manière mobile sur le cadre et pouvant être déplacé vers une position dans laquelle au moins une partie d'une surface de l'élément réfléchissant autre que la surface réfléchissante est recouverte par l'élément obturateur non transparent, de sorte que la quantité de lumière incidente sur au moins une partie de la surface de l'élément réfléchissant est réduite.

5. Dispositif selon l'une quelconque des revendications 1 à 4, dans lequel l'élément réfléchissant est formé d'une seule pièce de matériau acrylique.

6. Dispositif selon la revendication 1, dans lequel:
le dispositif pouvant être monté sur la tête comprend une unité de commande de transparence d'élément réfléchissant; et
l'élément réfléchissant comprend un élément obturateur à cristaux liquides pouvant être actionné pour modifier la transparence de l'élément réfléchissant en réponse à une instruction émise par l'unité de commande de transparence de l'élément réfléchissant.

7. Dispositif selon l'une quelconque des revendications 1 à 6, dans lequel le support de dispositif mobile est configuré pour recevoir un téléphone mobile et une console de jeux portative comme dispositif mobile.

8. Procédé destiné à être utilisé dans un système selon la revendication 1, le procédé consistant à:
capturer une image comprenant une image réfléchie de l'œil de l'utilisateur réfléchie par la surface réfléchissante de l'élément réfléchissant et comprenant une image d'une partie de l'environnement visuel de l'utilisateur, en utilisant la caméra du dispositif mobile;
déterminer une première partie de l'image capturée correspondant à l'image réfléchie de l'œil de l'utilisateur et effectuer un traitement de suivi oculaire sur la première partie; et déterminer une seconde partie de l'image capturée correspondant à l'image de la partie de l'environnement visuel de l'utilisateur et effectuer un traitement de localisation et de cartographie sur la seconde partie.

9. Logiciel qui, lorsqu'il est exécuté par un ordinateur, permet à l'ordinateur d'exécuter le procédé selon la revendication 8.
